## Europäisches Patentamt

## European Patent Office

## Office européen des brevets

(11) Veröffentlichungsnummer: **0 084 312**
**B1**

# (12)   EUROPÄISCHE PATENTSCHRIFT

(45) Veröffentlichungstag der Patentschrift:
17.04.85

(21) Anmeldenummer: 83100012.0

(22) Anmeldetag: 04.01.83

(51) Int. Cl.⁴: **C 08 L 33/04, C 09 D 3/81 //**
**(C08L33/04, 67:06)**

(54)   **Strahlungshärtbare wässrige Bindemittelemulsionen.**

(30) Priorität: 14.01.82 DE 3200907

(43) Veröffentlichungstag der Anmeldung:
27.07.83 Patentblatt 83/30

(45) Bekanntmachung des Hinweises auf die Patenterteilung:
17.04.85 Patentblatt 85/16

(84) Benannte Vertragsstaaten:
AT BE DE FR GB IT NL SE

(56) Entgegenhaltungen:
EP - A - 0 037 463
DE - A - 2 910 714
DE - B - 2 651 507
US - A - 4 125 503

(73) Patentinhaber: BAYER AG, Konzernverwaltung RP
Patentabteilung, D-5090 Leverkusen 1 Bayerwerk (DE)

(72) Erfinder: Frank, Walter, Karpfenweg 2, D-8852 Tain/Lech
(DE)
Erfinder: Bendszus, Otto, Ing.-grad., Breitestrasse 92,
D-4150 Krefeld (DE)
Erfinder: Meixner, Jürgen, Dr., Bethelstrasse 18,
D-4150 Krefeld 1 (DE)
Erfinder: Freier, Hans-Joachim, Dr.,
Campendonckstrasse 5, D-4150 Krefeld (DE)
Erfinder: Traenckner, Hans-Joachim, Dr.,
Wedelstrasse 46, D-4150 Krefeld (DE)

## Beschreibung

Die Erfindung betrifft strahlungshärtbare, wäßrige Bindemittelemulsionen auf Basis eines Gemisches aus strahlungshärtbaren (Meth)Acryloyloxygruppen enthaltenden Präpolymeren und strahlungshärtbaren, copolymerisierbaren, ungesättigten Polyestern als in das Copolymere einbaubare Emulgatoren. Die Emulsionen werden vorzugsweise für die Beschichtung von Holz und holzähnlichen Stoffen, z. B. Furniere imitierende Folien eingesetzt.

Es sind bereits eine Vielzahl wäßriger Dispersionen auf Basis (Meth)Acrylatpräpolymerer unterschiedlicher Zusammensetzung bekannt. In der Hauptsache werden anionische wäßrige Dispersionen beschrieben, die durch Neutralisation Carboxylgruppen enthaltender Präpolymerer, eventuell mit Lösungsmittelzusatz zu erhalten sind (vgl. Lackkunstharze, H. Wagner und H. F. Sarx, Carl Hanser Verlag 1971, S. 235). Solche Dispersionen haben den Nachteil, daß die Neutralisationsmittel wie Alkalien und Amine die Verseifung der kondensierten, Estergruppen enthaltenden Bindemittel beschleunigen. Weiter verbleiben die Neutralisationsmittel mindestens teilweise im Lackfilm, wodurch dessen Wasserfestigkeit abnimmt und die Aminreste Vergilbung bewirken können. Der eventuell vorhandene Lösungsmittelanteil ist beim Trocknungsprozeß umweltbelastend.

Aus der DE-OS 2 853 921 ist es bekannt, strahlungshärtbare, wäßrige Bindemitteldispersionen auf der Basis von C—C-Doppelbindungen enthaltenden Präpolymeren herzustellen, wobei Polyvinylalkohol und/oder Vinylpyrrolidon-Vinylester-Copolymere — stets mit Restgehalten an Vinylacetat bzw. Vinylestern — als Dispergiermittel eingesetzt werden. Die Herstellung der wäßrigen Dispersionen erfolgt in Gegenwart von Lösungsmitteln. Nachteilig bei diesem Prozeß ist der zum Dispergieren benötigte große Aufwand durch das Abdestillieren des Lösungsmittels nach dem Dispergieren. Weiter neigen diese Dispergiermittel infolge ihres hochmolekularen Aufbaus bei der Applikation der Dispersion an durch Luftzug besonders exponierten Stellen der Auftragsmaschinen zur Film- und Stalaktitenbildung. Sie sind nur sehr schwer wieder in Lösung zu bringen und behindern die Applikation oft bis zum Abbruch.

Die DE-OS 2 936 039 betrifft strahlungshärtbare, wäßrige Dispersionen auf Basis von Urethanacrylaten, die eingebaute Sulfonsäuregruppen enthalten und dadurch das Dispergieren in Wasser ermöglichen. Zur leichteren Handhabbarkeit jedoch erfolgt die Herstellung der Dispersionen in Gegenwart bis zu 30 Gew.-%, bezogen auf Urethanacrylat, an Lösungsmitteln, die vor der Härtung entfernt werden sollen. Bei höheren Gehalten an Sulfonsäuregruppen in den gehärteten Produkten wird ferner die Wasserempfindlichkeit erhöht. Wegen der relativ hohen Viskosität der Dispersionen sind diese auf den zur Holzbeschichtung eingesetzten Gießapparaturen nur bedingt geeignet.

Schließlich sind aus der DE-OS 2 804 216 wäßrige Emulsionen von Gemischen ungesättigter Polyester bekannt, die als lufttrocknende Beschichtungsmittel für Holz und holzähnliche Stoffe eingesetzt werden. Mindestens einer der ungesättigten Polyester dient als einbaubarer Emulgator. Er enthält einkondensierte Alkylenoxyreste (—Alkylen—O—) und Allyloxygruppen. Derartige Emulgatorpolyester sind zum Emulgieren von (Meth)Acryloyloxygruppen enthaltenden Präpolymeren ungeeignet, da sie unter anderem nach kurzer Zeit Gelierung der Mischung bewirken.

Aufgabe der vorliegenden Erfindung war es, wäßrige strahlenhärtbare, von Reaktivverdünnern freie Bindemittelemulsionen auf Basis von Präpolymeren mit (Meth)-Acryloyloxygruppen bereitzustellen, die durch den Emulgator einen stabilen Öl-in-Wasser-Aufbau erhalten, wodurch sie auch auf den für die Möbelbeschichtung gebräuchlichen Gießmaschinen applizierbar sind und bei denen der Emulgator bei der Strahlenhärtung durch Copolymerisation in das Polymere eingebaut wird.

Die Aufgabe wurde dadurch gelöst, daß zum Emulgieren der (Meth)Acryloyloxygruppen enthaltenden Präpolymeren (= Acrylatpräpolymere) nichtionisch wirksame Emulgatorpolyester verwendet werden, die über eingebaute Einheiten von $\alpha,\beta$-monoolefinisch ungesättigten Dicarbonsäuren mit dem Acrylatpräpolymeren copolymerisieren und deren Polyolanteil Alkylenoxy-(—Alkylen—O—) und Benzyloxygruppen aufweist.

Gegenstand der Erfindung sind somit wäßrige strahlungshärtbare Emulsionen aus Gemischen von

A) 90 bis 50 Gew.-%, vorzugsweise 90 bis 70 Gew.-%, mindestens eines Acrylatpräpolymeren, enthaltend pro 100 g 0,2 bis 0,65, vorzugsweise 0,3 bis 0,55 Mol (Meth)Acryloyloxygruppen und mit einer Viskosität von 500 bis 300 000 mPas, vorzugsweise 1000 bis 100 000 mPas, gemessen bei 20° C,

B) 10 bis 50 Gew.-%, vorzugsweise 10 bis 30 Gew.-%, mindestens eines Emulgatorpolyesters mit einer Viskosität von 2000 bis 200 000 mPas, vorzugsweise 10 000 bis 50 000 mPas, gemessen bei 20° C und enthaltend pro 100 g Emulgatorpolyester
   1.   0,06 bis 0,28 Mol, vorzugsweise 0,1 bis 0,23 Mol einkondensierte Einheiten einer $\alpha,\beta$-monoolefinisch ungesättigten Dicarbonsäure und
   2.   0,04 bis 0,34 Mol, vorzugsweise 0,1 bis 0,2 Mol Benzyloxygruppen sowie
   3.   30 bis 80 Gew.-%, vorzugsweise 40 bis 78 Gew.-%, bezogen auf Emulgatorpolyester, an Alkylenoxygruppen (—Alkylen—O—)
   — die Summe der Prozentgehalte aus A und B ist 100 —

C) 25 bis 400 Gew.-%, vorzugsweise 40 bis 300 Gew.-%, Wasser und

D) 0 bis 10 Gew.-%, vorzugsweise 0 bis 5 Gew.-%, mindestens eines üblichen Photoinitiators,
— die Prozentgehalte von C bzw. D sind auf die Summe von A und B bezogen —.

Die Emulsionen vorliegender Anmeldung sind lösungsmittel- und monomerenfrei. Monomerenfrei bedeutet frei von Monomeren, die mit den Komponenten A und B copolymerisierbar sind.

Acrylatpräpolymere A) im Sinne vorliegender Erfindung sind mindestens zwei (Meth)Acryloyloxygruppen enthaltende Präpolymere, die sich von Polyestern, Polyethern, Polyetherpolyestern, Polyepoxidverbindungen, aliphatischen Polyolen, Polyurethanen und Vinylpolymerisaten ableiten. Derartige Acrylatpräpolymere sind bekannt und beispielsweise beschrieben in
US-PS 2 101 107, 2 413 973, 2 951 758, 3 066 112, 3 301 743, 3 368 900, 3 380 831, 3 455 801, 3 469 982, 3 485 732, 3 530 100, 3 551 246, 3 552 986, 3 628 963, 3 660 145, 3 664 861, 3 689 310, 3 719 521, 3 732 107, 3 782 961, 3 840 369, 3 888 830, 4 033 920, 4 206 025;
GB-PS 1 006 587, 1 241 823, 1 241 824, 1 321 372,
Deutsche Offenlegungsschriften 1 916 499 und 2 853 921.

Bevorzugte Acrylatpräpolymere sind Polyester- und Polyurethanacrylate.

Besonders bevorzugte Polyesteracrylate sind (Meth)Acryloyloxygruppen enthaltende Polyester aus aliphatischen Dicarbonsäuren mit 4 bis 10 C-Atomen und/oder cycloaliphatischen Dicarbonsäuren mit 8 bis 11 C-Atomen und/oder aromatischen Dicarbonsäuren mit 8—10 C-Atomen wie Adipinsäure, Bernsteinsäure, Sebacinsäure, Hexahydrophthalsäure, Terephthalsäure, o-, m-, p-Benzoldicarbonsäure, Maleinsäure, Fumarsäure bzw. deren Derivate (z. B. Anhydride) und mehrwertigen aliphatischen Alkoholen mit 2 bis 6 C-Atomen und/oder mehrwertigen aliphatischen Etheralkoholen mit 4 bis 16 C-Atomen wie Ethylenglykol, Di-, Triethylenglykol, Propandiole, Dipropylenglykol, Butandiole, Hexandiol-1,6, Neopentylglykol, Trimethylolpropan, oxethyliertes Trimethylolpropan (mit durchschnittlich 3 bis 5 Ethylenoxideinheiten), Pentaerythrit, oxethyliertes Pentaerythrit, Dipentaerythrit. Die Polyesteracrylate werden nach den üblichen Verfahren in einem Schritt oder stufenweise hergestellt.

Besonders bevorzugte Polyurethanacrylate sind Polyadditionsprodukte aus $\omega$-Hydroxyal-kyl(meth)acrylaten mit 2 bis 4 C-Atomen im Hydroxyalkylrest, insbesondere $\beta$-Hydroxyet-hyl(meth)acrylat, und aliphatischen und/oder cycloaliphatischen und/oder aromatischen Polyisocyanaten wie Hexamethylen-, Isophoron-, Dicyclohexylmethan-, Diphenylmethan- und Toluylendiisocyanate, insbesondere Hexamethylendiisocyanat und Isophorondiisocyanat. Die Polyisocyanate sind insbesondere Isocyanatgruppen enthaltende Präpolymere (= Urethanpolyisocyanate) aus den vorgenannten überschüssig eingesetzten Diisocyanaten und den mehrwertigen aliphatischen Alkoholen und/oder mehrwertigen aliphatischen Etheralkoholen, wie sie vorstehend bei den Polyesteracrylaten definiert sind. Die Herstellung der Urethanpolyisocyanate kann beispielsweise gemäß US-PS 3 183 112 erfolgen.

Die für Polyadditionen mit den $\alpha$-Hydroxyalkyl(meth)acrylaten eingesetzten Polyisocyanate können auch Isocyanuratgruppen oder Biuretgruppen aufweisen. Sie leiten sich insbesondere vom Hexame-thylendiisocyanat oder Isophorondiisocyanat ab und können gemäß US-PS 3 919 218 bzw. US-PS 3 124 605 erhalten werden.

Die $\alpha,\beta$-monoolefinisch ungesättigten Emulgator-Polyester B sind Polykondensationsprodukte min-destens einer $\alpha,\beta$-monoolefinisch ungesättigten Dicarbonsäure mit in der Regel 4 oder 5 C-Atomen oder deren esterbildende Derivate (z. B. Anhydride), gegebenenfalls in Abmischung mit bis zu 100 Mol-%, bezogen auf die ungesättigte Säurekomponente, mindestens einer aliphatischen gesättigten Dicarbonsäure mit 4—10 C-Atomen oder einer cycloaliphatischen oder aromatischen Dicarbonsäure mit 8—10 C-Atomen oder deren esterbildenden Derivate (z. B. ihren Anhydriden), mit mindestens einem aliphatischen zweiwertigen Polyetheralkohol, gegebenenfalls in Abmischung mit mindestens einem aliphatischen dreiwertigen Polyetheralkohol (bis zu 50 Mol-% bezogen auf Diol), und mit mindestens einem aliphatischen Polyalkohol mit n Hydroxygruppen (n = 3 oder 4, vorzugsweise 3), von denen mindestens eine und höchstens n—1 Hydroxygruppen mit Benzylalkohol verethert sind.

$\alpha,\beta$-Monoolefinisch ungesättigte Dicarbonsäuren sind vorzugsweise Maleinsäure, Fumarsäure und Itaconsäure. Als aliphatische gesättigte Dicarbonsäuren seien beispielhaft Bernsteinsäure, Adipinsäure und Sebacinsäure genannt. Als cycloaliphatische und aromatische Dicarbonsäuren kommen bei-spielsweise Hexahydrophthalsäure, Methylhexahydrophthalsäure, Tetrahydrophthalsäure, Methylte-trahydrophthalsäure, Endo-methylentetrahydrophthalsäure, o-Phthalsäure, Isophthalsäure und Terephthalsäure in Frage.

Die aliphatischen zweiwertigen Polyetheralkohole sind bevorzugt Polyalkylenglykole mit 2 bis 4 C-Atomen in der Alkylengruppe, wobei im Falle der Anwesenheit von Trimethylenoxy- und/oder Butylenoxygruppen im Polyalkylenglykol stets mindestens 50 Mol-% an Ethylenoxygruppen, bezogen auf Summe der Mole an Alkylenoxygruppen vorhanden sein sollen. Besonders bevorzugt sind Polyethylenglykole. Die aliphatischen dreiwertigen Polyetheralkohole leiten sich vorzugsweise vom Trimethylolpropan ab und werden vorzugsweise durch Oxalkylierung mit Ethylenoxid in bekannter Weise erhalten. Beispiele für Benzyloxygruppen enthaltende Polyalkohole sind Trimethyl-ol-propanmon-obenzylether, Trimethylolpropandibenzylether, Pentaerythritmonobenzylether, Pentaerythritdibenzy-lether und Pentaerythrittribenzylether.

Die Herstellung der Emulgatorpolyester kann nach bekannten Verfahren in einem Schritt oder

3

schrittweise erfolgen.

Die Säurezahl der Emulgator-Polyester B. sollen 1—50, vorzugsweise 5—40 mg/KOH pro g Substanz und die OH-Zahlen 10—100, vorzugsweise 10—80 mg/KOH pro g Substanz und die als Zahlenmittel bestimmten Molekulargewichte 300 bis 5000, vorzugsweise 500—2000, betragen.

Um die erfindungsgemäßen Überzugsmittel vor unerwünschter vorzeitiger Polymerisation zu bewahren, empfiehlt es sich, bereits bei der Herstellung der Acrylatpräpolymeren und Emulgatorpolyester 0,001—0,1 Gew.-% Polymerisationsinhibitoren oder Antioxidantien zuzusetzen. Geeignete Stabilisatoren sind in »Methoden der organischen Chemie« (Houben-Weyl), 4. Auflage, Band XIV/I, S. 433—452, 756; Georg-Thieme-Verlag, Stuttgart, 1961, beschrieben. Sehr gut geeignet ist z. B. p-Benzochinon in einer Konzentration von 0,01 bis 0,05 Gew.-%, bezogen auf Summe aus dem Acrylatpräpolymeren und Emulgatorpolyester.

Geeignete Photoinitiatoren können der Monographie von J. Korsar, Light-Sensitive Systems, J. Wiley & Sons, New York-London-Sydney 1965, entnommen werden.

Bevorzugte Photoinitiatoren D sind die üblicherweise eingesetzten Verbindungen, beispielsweise Benzophenon sowie ganz allgemein aromatische Ketoverbindungen, die sich vom Benzophenon ableiten, wie Alkylbenzophenone, halogen-methylierte Benzophenone gemäß der DE-OS 1 949 010, Anthron, halogenierte Benzophenone eventuell in Kombination mit tert. aliphatischen Aminen und Michlers Keton. Ebenfalls wirksame Photoinitiatoren stellen Anthrachinon und zahlreiche seiner Derivate dar, beispielsweise $\beta$-Methylanthrachinon, tert.-Butylanthrachinon und Anthrachinoncarbonsäureester, ebenso Oximester gemäß der DE-OS 1 795 089.

Besonders bevorzugte Photoinitiatoren sind Benzoin und seine Derivate (vgl. DE-AS 1 694 149, DE-OS 1 769 168, 1 769 853, 1 769 854, 1 807 297, 1 807 301, 1 919 678).

Weitere besonders bevorzugte Photoinitiatoren sind Benzilketale, wie z. B. Benzildimethylketal und Hydroxyalkylphenone, wie z. B. 2-Hydroxy-2-methyl-1-phenylpropan-1-on.

Die Herstellung der erfindungsgemäßen Emulsionen kann durch Einrühren des Wassers C in das Gemisch A + B, z. B. durch einfaches Rühren oder mittels Dissolver, erfolgen.

Zur Ausbildung einer feinteiligen Emulsion, d. h. zur besseren Einbringung der Scherkräfte, ist portionsweiser Wasserzusatz bei Temperaturen unter 30°C vorteilhaft. Bei optomaler Scherung werden Öl-in-Wasser-Emulsionen gebildet.

Der Photoinitiator D kann dem Gemisch A + B vor dem Emulgieren oder, wenn ausreichende Wasserlöslichkeit besteht, der Emulsion zugesetzt werden.

Zum Schutz von lichtempfindlichen Untergründen, z. B. hellen Hölzern, können den Überzugsmassen geringe Mengen der üblichen UV-Absorber zugesetzt werden, z. B. 2-Hydroxy-4-methoxybenzophenon, oder die üblicherweise verwendeten Zimtsäure und Benzotriazinderivate.

Übliche Zuschlags- und Farbstoffe, Konservierungs-, Mattierungs- und Verlaufsmittel sowie Pigmente können zur Erzielung spezieller Effekte ebenfalls zugesetzt werden, sofern sie die Emulsionsstabilität und die Polymerisation nicht wesentlich beeinflussen.

Die erfindungsgemäßen Emulsionen eignen sich hervorragend zur Verarbeitung auf den herkömmlichen mit Gießmaschinen ausgerüsteten Lackierstraßen. Weiter sind sie durch Walzen und Spritzen applizierbar. Bevorzugte Substrate sind Holz und holzähnliche Produkte, z. B. Furniere imitierende Folien.

Die Härtung erfolgt mit ionisierender, z. B. energiereicher Elektronenstrahlung bzw. in Gegenwart von Photoinitiatoren mit UV-Strahlung, vorteilhaft erst nach Wasserabgabe des Lackfilms. In der Regel erfolgt die Verfilmung durch Abgabe des Wassers in den bei Lacken üblichen Schichtdicken (10—200 µm Trockenschichtdicke) bereits in kurzer Zeit, ohne daß Wärme zugeführt werden muß. Falls gewünscht, kann die Filmbildung auch bei Temperaturen bis 100°C vorgenommen werden.

Die nachfolgenden Beispiele sollen die Erfindung näher erläutern. Die Prozentangaben beziehen sich auf das Gewicht. Die Viskositätsmessungen wurden im Höppler-Kugelfallviskosimeter (DIN 53 015) bei 20°C durchgeführt.

## Herstellung der Ausgangsmaterialien

### Acrylatpräpolymer A1

91 g Adipinsäure, 55 g Phthalsäureanhydrid, 100 g Trimethylolpropan, 62 g Ethylenglykol und 66 g 2-Ethylhexansäure werden in einer Schmelzkondensation bei 190°C unter Inertgasatmosphäre verestert, bis die Säurezahl (SZ) unter 10 liegt. Sie betrug 7,4 und die OH-Zahl 300 mg KOH/g Substanz. Nach Zugabe von 86 g Acrylsäure, 0,25 g Hydrochinon, 3 g p-Toluolsulfonsäure und 175 g Toluol wird unter Luftdurchleiten azeotrop bei 100—120°C weiterverestert. Nach dem Abdestillieren des Toluols imVakuum besitzt das Präpolymere eine Viskosität von 18 500 mPa · s. Die SZ beträgt 8 und die OH-Zahl 80 mg KOH/g Substanz.

### Acrylatpräpolymer A2

Es wird zunächst ein OH-gruppenhaltiger Acryloyloxygruppen enthaltender Partialester hergestellt, indem ein oxethyliertes Trimethylolpropan [OH-Zahl 550 (mg KOH/g Substanz), Oxethylierungsgrad ca. 4] mit Acrylsäure azeotrop verestert wird.

925 g oxethyliertes Trimethylolpropan werden mit 430 g Acrylsäure, 12 g p-Toluolsulfonsäure, 1 g p-Methoxyphenol, 1,2 g Di-tert.-butylhydrochinon und 280 g Toluol unter Durchleiten von Luft zum Rückfluß erhitzt und das entstehende Reaktionswasser azeotrop entfernt. Nach Erreichen einer Säurezahl kleiner 3 (mg KOH/g Substanz) wird das Lösungsmittel im Vakuum entfernt und das Produkt einer Klärfiltration unterworfen. Es wird ein OH-gruppenhaltiger ethylenisch ungesättigter Partialester mit folgenden Kenndaten erhalten:

| | |
|---|---|
| Jodfarbzahl: | 0–1 |
| Säurezahl: | 2 |
| OH-Zahl: | 115 |

Anschließend wird vorstehend erhaltener Acryloyloxygruppen enthaltender Partialester mit 2,4-Toluylendiisocyanat zu Acrylatpräpolymer A2 umgesetzt.

In einer Rührapparatur werden unter Überleiten von trockener Luft 174 g 2,4-Toluylendiisocyanat und 0,7 g p-Methoxyphenol vorgelegt und auf 40–65° C erwärmt.

Innerhalb von ca. 2 Stunden werden 980 g des OH-Gruppen und Acryloyloxygruppen Partialesters zugegeben und bei der angegebenen Temperatur so lange gerührt, bis der NCO-Wert kleiner 0,1 Gew.-% beträgt. Die Viskosität des Acrylatpräpolymers A2 beträgt 46 000 mPa · s.

### Emulgatorpolyester B1

199 g Maleinsäureanhydrid, 609 g Polyethylenglykol (MG 400) und 228 g Trimethylolpropanmonobenzylether werden unter $N_2$-Strom bei 190°C der Schmelzkondensation unterzogen. Säurezahl 8, OH-Zahl 63. Viskosität 40 000 mPa · s.

### Emulgatorpolyester B2

175 g Maleinsäureanhydrid, 643 g Polyethylenglykol (MG 400) und 214 g Trimethylolpropandibenzylether werden wie unter B1 bis SZ 7 kondensiert. Die OH-Zahl beträgt 36 und die Viskosität 20 500 mPa · s.

### Beispiele

Zur Herstellung der erfindungsgemäßen Emulsionen werden je 200 g Acrylatpräpolymeres A1 bzw. A2 mit 50 g Emulgatorpolyester B1 bzw. B2 und je 5 g Photoinitiator Benzyldimethylketal gemischt, mit jeweils 110 g Wasser im Dissolver bei 8000 U/min. 2 Minuten geschert und anschließend mit Wasser unter Rühren (1000 U/Min.) auf 50% Festkörpergehalt eingestellt. Es entstehen Öl-in-Wasser-Emulsionen.

| | Beispiel | |
|---|---|---|
| | 1 | 2 |
| Acrylatpräpolymeres | A1 | A2 |
| Emulgatorpolyester | B1 | B2 |
| Viskosität mPas | 55 | 68 |
| Teilchengröße nm | 300–600 | 250–500 |

Die Emulsionen lassen sich auf den zur Holzbeschichtung gebräuchlichen Gießmaschinen einwandfrei ohne Haut- und Stalaktitenbildung an den durch Luftzug besonders exponierten Stellen wie Vorratsbehälter und Gießlippen vergießen. Ein Auftrag von 70 g/m² härtet unter IST-Strahler (Impulsstrahler der Firma Strahlentechnik Hildebrand, Werner und Pfleiderer, 80 Watt/cm Strahlerlänge, Abstand 20 cm) mit 8 m/Min. Verarbeitungsgeschwindigkeit zu einwandfrei wasserfesten Lackfilmen.

## Patentansprüche

1. Wäßrige, strahlungshärtbare Emulsionen aus Gemischen von

A) 90 bis 50 Gew.-% mindestens eines Acrylatpräpolymeren, enthaltend pro 100 g 0,2 bis 0,65 (Meth)Acryloyloxygruppen und mit einer Viskosität von 500 bis 300 000 mPa · s, gemessen bei 20°C,

B) 10 bis 50 Gew.-% mindestens eines Emulgatorpolyesters mit einer Viskosität von 2000 bis 200 000 mPa · s, enthaltend pro 100 g Emulgatorpolyester
   1. 0,06 bis 0,28 Mol einkondensierte Einheiten einer $\alpha,\beta$-monoolefinisch ungesättigten Dicarbonsäure und
   2. 0,04 bis 0,34 Mol Benzyloxygruppen sowie
   3. 30 bis 80 Gew.-%, bezogen auf Emulgatorpolyester, an Alkylenoxygruppen (−Alkylen−O−)
   − die Summe der Prozentgehalte aus A und B ist 100 −

C) 25 bis 400 Gew.-% Wasser und

D) 0 bis 10 Gew.-% mindestens eines üblichen Photoinitiators,
   − die Prozentgehalte von C) und D) sind auf die Summe von A) und B) bezogen −.

2. Verwendung der wäßrigen strahlungshärtbaren Emulsionen gemäß Patentanspruch 1 zur Beschichtung von Holz und Furniere imitierenden Folien.

## Claims

1. Aqueous, radiation-hardenable emulsions based on mixtures of

A) 90 to 50% by weight of at least one acrylate prepolymer, containing, per 100 g, 0,2 to 0,65 (meth)acryloyloxy groups and having a viscosity of 500 to 300 000 mPas, measured at 20°C,

B) 10 to 50% by weight of at least one emulsifier polyester having a viscosity of 2000 to 200 000 mPas and containing, per 100 g of emulsifier polyester,
   1. 0,06 to 0,28 mols of condensed units of a $\alpha,\beta$-monoolefinically unsaturated dicarboxylic acid and
   2. 0.04 to 0,34 mols of benzyloxy groups and
   3. 30 to 80% by weight, based on the emulsifier polyester, of alkylene-oxy groups (−alkylene−O−)
   − the sum of the percent contents of A and B is 100 −

C) 25 to 400% by weight of water and

D) 0 to 10% by weight of at least one customary photoinitiator,
   − the percent contents of C and D are based on the sum of A and B −.

2. Use of the aqueous radiation-hardenable emulsions according to patent claim 1 for coating wood and films imitating veneers.

## Revendications

1. Emulsions aqueuses, durcissables par irradiation, formées de mélanges de:

A) 90 à 50% en poids d'au moins un prépolymère acrylique, contenant pour 100 g 0,2 à 0,65 groupe (méth)acryloyloxy et ayant une viscosité de 500 à 300 000 mPa · s, mesurée à 20°C,

B) 10 à 50% en poids d'au moins un polyester émulsifiant ayant une viscosité de 2000 à 200 000 mPa · s, contenant pour 100 g de polyester émulsifiant:
   1. 0,06 à 0,28 mol de motifs incorporés par condensation d'un acide dicarboxylique à insaturation monooléfinique en $\alpha-\beta$, et
   2. 0,04 à 0,34 mol de groupes benzyloxy, ainsi que
   3. 30 à 80% en poids, par rapport au polyester émulsifiant, de groupes alkylèneoxy (−alkylèny−O−),
   − la somme des teneurs en pourcentage de A et B étant égale à 100 −

C) 25 à 400% en poids d'eau, et

D) 0 à 10% en poids d'au moins un photoamorceur usuel,
   − les teneurs en pourcentage de C et D étant rapportées à la somme de A et B −.

2. Utilisation des émulsions aqueuses, durcissables par irradiation, selon la revendication 1, pour le revêtement du bois et des feuilles imitant du bois de placage.